# EUROPEAN PATENT APPLICATION

(11) **EP 4 465 405 A1**
(43) Date of publication of application: **20.11.2024**
(21) Application number: 23740518.8
(22) Date of filing: 13.01.2023
(51) Int. Cl.: H01M 10/058, H01M 10/0583, H01M 50/46, H01M 10/0565, H01M 50/449, H01M 10/0568, H01M 10/0567, H01M 10/0569, H01M 10/052

(54) **SECONDARY BATTERY MANUFACTURING METHOD**

(30) Priority: 14.01.2022 KR 20220006031
(71) Applicant: LG Energy Solution, Ltd., Seoul 07335 (KR)
(72) Inventor: LIM, Tae Seob, Daejeon 34122 (KR); RYU, Ji Hoon, Daejeon 34122 (KR); KIM, Je Young, Daejeon 34122 (KR); KIM, Dong Kyu, Daejeon 34122 (KR); YOON, Yeo Min, Daejeon 34122 (KR); SHIN, Won Kyung, Daejeon 34122 (KR)
(74) Representative: Goddar, Heinz J.
(86) International application number: PCT/KR2023/000695
(87) International publication number: WO 2023/136675

(57) **Abstract**

According to an aspect of the present invention, there is provided a method for manufacturing a secondary battery, the method including: preparing an electrode assembly in which electrodes and a separator are alternately laminated, and an adhesive is applied to a surface of at least one among the electrodes and the separator so as to adhere the electrodes and the separator to each other; accommodating the electrode assembly in a battery case; injecting a gel polymer electrolyte composition into the battery case to impregnate the electrode assembly with the gel polymer electrolyte composition; and curing the gel polymer electrolyte composition, wherein the adhesive includes a first oligomer compound, the separator includes a porous substrate and ceramic coating layers disposed on both surfaces of the porous substrate, the ceramic coating layers include 92 wt% or more and less than 100 wt% of inorganic particles and more than 0 wt% and 8 wt% or less of a binder, and the gel polymer electrolyte composition includes a lithium salt, an organic solvent, a polymerization initiator, and a second oligomer compound.

## Description

### Cross-reference to Related Applications

This application claims the benefit of Korean Patent Application No. 10-2022-0006031, filed on January 14, 2022, in the Korean Intellectual Property Office, the disclosure of which is incorporated herein in its entirety by reference.

### TECHNICAL FIELD

The present disclosure relates to a method for manufacturing a secondary battery.

### BACKGROUND ART

As technology development and demand with respect to electronic devices have increased, demand for secondary batteries as an energy source has been significantly increased, and, among these secondary batteries, lithium secondary batteries having high energy density and high voltage have been commercialized and widely used.

The secondary batteries may be manufactured by, for example, accommodating an electrode assembly in which electrodes and a separator are alternately laminated in a battery case, injecting an electrolyte solution into the battery case, and sealing the battery case.

In this case, the separator is generally used in which ceramic coating layers containing inorganic particles and a binder are formed on both sides of a porous substrate. In this case, the binder is generally included in a large amount for easy adhesion of the electrode and the separator, and in this case, there are limitations in that resistance increases due to excessive use of the binder, and energy density of the battery decreases as the thickness of the separator increases.

In order to prevent the above-described limitations, when the binder content in the ceramic coating layers included in the separator is lowered, a stiffness of the cell may be decreased due to the deterioration in the adhesion between the electrode and the separator, and the quality may be deteriorated, for example, misalignment of the electrodes.

Meanwhile, an electrolyte in a liquid state, in particular, an ion conductive organic liquid electrolyte, in which a salt is dissolved in a non-aqueous organic solvent, has been mainly used as a conventional electrolyte in a secondary battery. However, such a liquid electrolyte has limitations such as the possibility of leakage out of the secondary battery, the deterioration of safety, and a decrease in cell stiffness.

In this regard, research to commercialize a polymer electrolyte, such as a gel polymer electrolyte, instead of the liquid electrolyte, has emerged. There are advantages in that the gel polymer electrolyte can be prevented from leaking out of the secondary battery, and the cell stiffness is excellent. However, the gel polymer electrolyte has limitations of a high interfacial resistance and low ionic conductivity compared to the liquid electrolyte.

In this respect, there is a need to develop a secondary battery in which resistance reduction and cell stiffness of the secondary battery are simultaneously improved.

### SUMMARY

An aspect of the present disclosure provides a method for manufacturing a secondary battery having reduced resistance and simultaneously having an improvement in both cell stiffness and mechanical durability.

According to an aspect of the present disclosure, there is provided a method for manufacturing a secondary battery, the method including: preparing an electrode assembly in which electrodes and a separator are alternately laminated, and an adhesive is applied to a surface of at least one among the electrodes and the separator so as to adhere the electrodes and the separator to each other; accommodating the electrode assembly in a battery case; injecting a gel polymer electrolyte composition into the battery case to impregnate the electrode assembly with the gel polymer electrolyte composition; and curing the gel polymer electrolyte composition, wherein the adhesive includes a first oligomer compound, the separator includes a porous substrate and ceramic coating layers disposed on both surfaces of the porous substrate, the ceramic coating layers include 92 wt% or more and less than 100 wt% of inorganic particles and more than 0 wt% and 8 wt% or less of a binder, and the gel polymer electrolyte composition includes a lithium salt, an organic solvent, a polymerization initiator, and a second oligomer compound.

The method for manufacturing a secondary battery according to the present disclosure includes an electrode assembly in which electrodes and a separator are alternately laminated, and a gel polymer electrolyte, wherein the separator contains inorganic particles and a binder in specific amounts. Since the ceramic coating layers included in the separator contains a small amount of the binder, an increase in resistance due to an excessive amount of the binder may be prevented, and the gel polymer electrolyte may compensate for a decrease in cell stiffness of the secondary battery accompanied by the reduction of resistance. Accordingly, the secondary battery manufactured by the method for manufacturing a secondary battery according to the present disclosure can reduce the resistance of the secondary battery and improve both the cell stiffness and the mechanical durability of the secondary battery according to the combination of the above components.

Also, the method for manufacturing a secondary battery according to the present disclosure is characterized by preparing an electrode assembly in which electrodes and a separator are alternately laminated, and the electrodes and the separator adhere to each other by means of an adhesive, accommodating the electrode assembly in a battery case, and injecting a gel polymer electrolyte composition and curing the same to manufacture the secondary battery, wherein the adhesive includes a first oligomer compound. The adhesive may include the first oligomer compound, and when the gel polymer electrolyte composition is cured, the first oligomer compound may also participate in curing. In addition, the first oligomer compound may bond the electrodes and the separator, thereby not only preventing the misalignment of the alignment positions of the electrode and the separator when preparing the electrode assembly, but also improving cell stiffness by being finally polymerized by curing the gel polymer electrolyte composition.

### BRIEF DESCRIPTION OF THE DRAWINGS

FIG. 1 is a schematic side view of an exemplary electrode assembly for describing a preparation step of an electrode assembly in the method for manufacturing a secondary battery of the present disclosure.
FIG. 2 is a schematic plan view of a separator or an electrode for describing the preparation step of the electrode assembly in the method for manufacturing a secondary battery of the present disclosure.
FIG. 3 is a schematic side view of a separator for describing the preparation step of the electrode assembly in the method for manufacturing a secondary battery of the present disclosure.
FIG. 4 is a view for describing a preparation process of the electrode assembly for describing the method for manufacturing a secondary battery of the present disclosure.
FIG. 5 is a view for describing a preparation process of the electrode assembly for describing the method for manufacturing a secondary battery of the present disclosure.
FIG. 6 is a view for describing a preparation process of the electrode assembly for describing the method for manufacturing a secondary battery of the present disclosure.
FIG. 7 is a view for describing a preparation process of the electrode assembly for describing the method for manufacturing a secondary battery of the present disclosure.
FIG. 8 is a view for describing an accommodating step of the electrode assembly in the method for manufacturing a secondary battery of the present disclosure.
FIG. 9 is a view for describing an injection step of a gel polymer electrolyte composition and an impregnation step of the electrode assembly in the method for manufacturing a secondary battery of the present disclosure.
FIG. 10 is a view for describing a curing step of a gel polymer electrolyte in the method for manufacturing a secondary battery of the present disclosure.

### DETAILED DESCRIPTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the disclosure, based on the principle that an inventor may properly define the meaning of the words or terms to best explain the disclosure.

The expression "average particle diameter (D50)" in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to several millimeters, and may obtain highly reproducible and high resolution results.

Hereinafter, the secondary battery of the present disclosure will be described in detail with reference to the accompanying drawings. In adding reference numerals to components in each drawing, the same components may have the same reference numerals, if possible, although they are shown in different drawings. Moreover, detailed descriptions related to well-known functions or configurations may be omitted in order not to unnecessarily obscure subject matters of the present disclosure.

### Method for Manufacturing Secondary Battery

The present disclosure relates to a method for manufacturing a secondary battery, and specifically, to a method for manufacturing a lithium secondary battery.

The present disclosure provides a method for manufacturing a secondary battery, the method including: preparing an electrode assembly 100 in which electrodes 110 and 120 and a separator 130 are alternately laminated, and an adhesive 140 is applied to a surface of at least one among the electrodes 110 and 120 and the separator 130 so as to adhere the electrodes 110 and 120 and the separator 130 to each other; accommodating the electrode assembly 100 in a battery case 300; injecting a gel polymer electrolyte composition 200 into the battery case 300 to impregnate the electrode assembly 100 with the gel polymer electrolyte composition 200; and curing the gel polymer electrolyte composition 200, wherein the adhesive 140 includes a first oligomer compound, the separator 130 includes a porous substrate 131 and ceramic coating layers 132a and 132b disposed on both surfaces of the porous substrate 131, and the ceramic coating layers 132a and 132b include 92 wt% or more and less than 100 wt% of inorganic particles and more than 0 wt% and 8 wt% or less of a binder, and the gel polymer electrolyte composition 200 includes a lithium salt, an organic solvent, a polymerization initiator, and a second oligomer compound.

### (1) Preparing Electrode Assembly

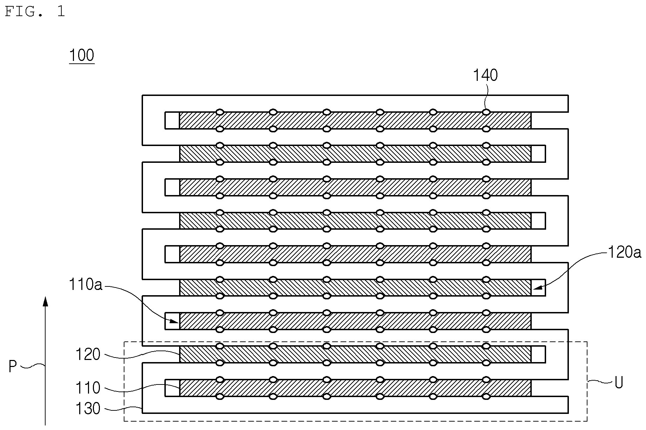

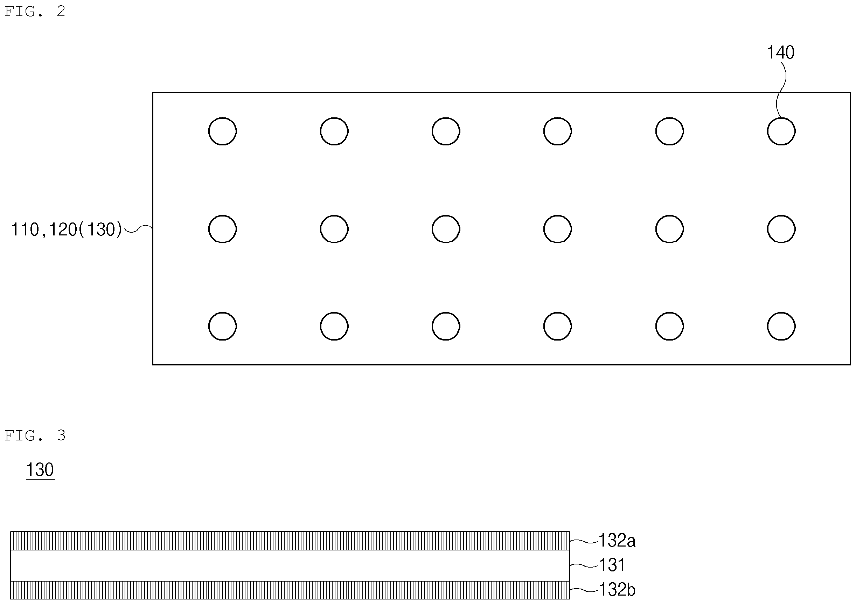

Referring to FIGs. 1 and 2, an electrode assembly 100 in which electrodes 110 and 120 and a separator 130 are alternately laminated and an adhesive 140 is applied to a surface of at least one among the electrodes 110 and 120 and the separator 130 so as to adhere the electrodes 110 and 120 and the separator 130 to each other, is prepared.

The electrode assembly 100 includes a plurality of electrodes 110 and 120 laminated in a vertical direction P. The number of the electrodes 110 and 120 may be two or more. As used herein, the term "vertical direction" may mean a vertical direction based on the ground, and is only for describing the laminating direction of the electrodes, but not for limiting the angle of the stacking direction.

The electrodes 110 and 120 may include a first electrode 110 and a second electrode 120. As illustrated in FIG. 1, the first electrode 110 and the second electrode 120 may be alternately laminated. The electrodes 110 and 120 may be alternately laminated with the separator 130 interposed therebetween. The first electrode 110 may be a positive electrode, and the second electrode 120 may be a negative electrode. Alternatively, the first electrode 110 may be a negative electrode, and the second electrode 120 may be a positive electrode. Each of the first electrode and the second electrode may be one or more, specifically two or more.

The first electrode 110 and the second electrode 120 may have a structure in which an active material slurry is applied to a current collector. The first electrode 110 and the second electrode 120 may be formed by applying, drying, and rolling the active material slurry on both surfaces of the current collector. The active material slurry may be formed by adding a granular active material, a conductive agent, a binder, or the like in a solvent, and stirring the resultant solution. In the first electrode 110 and the second electrode 120, an active material, a conductive agent, a binder, or the like, which are used for a positive electrode or a negative electrode in the art, may be used without limitation.

The current collector is not particularly limited so long as it has high conductivity without causing adverse chemical changes in the battery. Specifically, the current collector may include at least one selected from the group consisting of copper, stainless steel, aluminum, nickel, titanium, sintered carbon, and an aluminum-cadmium alloy. For example, when the electrodes 110 and 120 are positive electrodes, the current collector used for the electrodes 110 and 120 may include aluminum, and when the electrodes 110 and 120 are negative electrodes, the current collector used for the electrodes 110 and 120 may include copper.

The current collector may be used in various forms such as a film, a sheet, a foil, a net, a mesh, a porous body, a foam body, and a non-woven fabric body. In addition, the current collector may include a polymer layer and metal layers disposed on both surfaces of the polymer layer, and the metal layers may include at least one selected from the group consisting of copper, stainless steel, aluminum, nickel, titanium, sintered carbon, and an aluminum-cadmium alloy.

Specifically, when the electrodes 110 and 120 are negative electrodes, a compound capable of reversible intercalation and deintercalation of lithium may be used as a negative electrode active material included in the negative electrodes. Specific examples of the negative electrode active material may be a carbonaceous material such as artificial graphite, natural graphite, graphitized carbon fibers, and amorphous carbon; a metallic material alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOβ(0<β<2), SnO₂, vanadium oxide, and lithium vanadium oxide; or a composite including the metallic material and the carbonaceous material such as a SiC composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

In addition, specifically, when the electrodes 110 and 120 are positive electrodes, the positive electrode active material included therein is not particularly limited, and for example, the positive electrode active material may be a commonly used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₂, LiMn₂O₂, and LiMnO₂; lithium copper oxide (Li₂CuO₂); vanadium oxides such as LiV₃O₈, V₂O₅, and Cu₂V₂O₂; nickel (Ni)-site type lithium nickel oxide expressed by a chemical formula of LiNi_{2-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of Li being substituted with alkaline earth metal ions, but the positive electrode active material is not limited thereto. The positive electrode may be a Li-metal positive electrode.

The binder included in the electrodes may be any one binder polymer or a mixture of two or more thereof selected from the group consisting of a poly vinylidenefluoride polymer, polyvinyl alcohol, styrene butadiene rubber, polyethylene oxide, carboxyl methyl cellulose, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, polyarylate, and a low molecular compound having a molecular weight of 10,000 g/mol or less.

The conductive agent included in the electrodes is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

Examples of the thickener included in the electrodes may include carboxymethylcellulose (CMC).

As illustrated in FIGs. 1 and 2, the electrode assembly 100 includes a separator 130. The separator is alternately laminated with the electrodes.

As illustrated in FIG. 1, the separator 130 may be bent or folded in a zigzag shape to surround any one end portion of the electrodes 110 and 120. For example, as illustrated in FIG. 1, when the first electrode 110 and the second electrode 120 are alternately laminated, the separator 130 may be bent to surround one end portion 110a of the first electrode 110, and may be bent again to surround one end portion of the second electrode 120 on the reverse side from the one end portion 110a of the first electrode 110. As such bending is repeated, the separator 130 may be bent or folded in a zigzag shape. The electrode assembly 100 may include one separator 130.

The electrode assembly 100 may be a zigzag stack-type electrode assembly in which a basic unit, in which the first electrode 110, the separator 130, the second electrode 120, and the separator 130 are sequentially laminated by bending or folding the separator 130 in a zigzag shape, is laminated in one or more, specifically two or more.

As illustrated in FIG. 3, the separator 130 includes a porous substrate 131 and ceramic coating layers 132a and 132b disposed on both surfaces of the porous substrate.

The porous substrate 131 is not particularly limited as long as it is commonly used as a separator for a secondary battery. Specifically, it is preferable that the porous substrate 131 has excellent moisture-retention ability for an electrolyte as well as low resistance to ion migration in the electrolyte. More specifically, the porous substrate 131 may include at least one selected from the group consisting of a polyolefin-based resin such as polyethylene, polypropylene, polybutylene, or polypentene; a fluorine-based resin such as polyvinylidene fluoride or polytetrafluoroethylene; a polyester-based resin such as polyethylene terephthalate or polybutylene terephthalate; a polyacrylonitrile resin; and a cellulose-based resin, and may be a porous film or a non-woven fabric including any one or two or more copolymers or mixtures thereof, or a laminated structure of two or more layers thereof. The porous substrate 131 may be a porous film or a non-woven fabric including the polyolefin-based resin, or a laminated structure of two or more layers thereof.

The size and porosity of pores present in the porous substrate 131 are not particularly limited. Specifically, the porous substrate 131 may be a porous substrate including pores having an average pore diameter of 0.01 µm to 1 pm, specifically, 20 nm to 60 nm, in a porosity of 10 vol% to 90 vol%, specifically, 30 to 60 vol%, and in this case, it is preferable in that the mechanical strength of the porous substrate 131 may be improved, and at the same time, the ionic materials may more smoothly migrate between the positive electrode and the negative electrode. The average pore diameter and porosity may be measured by means of analysis using a focused ion beam (FIB), gas adsorption, or mercury intrusion porosimetry.

The thickness of the porous substrate 131 is not particularly limited, but may be specifically 1 to 100 pm, specifically 2 to 15 pm, in consideration of appropriate mechanical strength as a separator and the ease of migration of the ionic materials.

The ceramic coating layers 132a and 132b are disposed on both surfaces of the porous substrate 131.

The ceramic coating layers 132a and 132b include inorganic particles and a binder. More specifically, the ceramic coating layers may be made from only the inorganic particles and the binder.

The inorganic particles may be introduced in order to prevent short-circuiting of the positive electrode and the negative electrode due to thermal shrinkage of the porous substrate at a high temperature, and the inorganic particles may be provided as a kind of spacer capable of maintaining a physical shape of the porous substrate and minimizing the thermal shrinkage.

The inorganic particles may be used without particular limitation as long as they are electrochemically stable within an operating voltage range of the battery (for example, 0V to 5V based on Li/Li+) and do not cause oxidation and/or reduction reactions, that is, electrochemical reactions. The inorganic particles may include: lithium phosphate (Li₃PO₄); lithium titanium phosphate (LiₓTi_{y}(PO₄)₃, 0<x<2, and 0<y<3); lithium aluminum titanium phosphate (LiₓAl_{y}Ti_{z}(PO₄)₃, 0<x<2, 0<y<1, and 0<z<3); (LiAlTiP)ₓO_{y}-based glass (0<x<4 and 0<y<13) such as 14Li₂O-9Al₂O₃-38TiO₂-39P₂O₅; lithium lanthanum titanate (LiₓLa_{y}TiO₃, 0<x<2, and 0<y<3); lithium germanium thiophosphate (LiₓGe_{y}P_{z}S_{w}, 0<x<4, 0<y<1, 0<z<1, and 0<w<5) such as Li_{3.35}Ge_{0.35}P_{0.75}S₄; lithium nitride (LiₓN_{y}, 0<x<4, and 0<y<2) such as Li₃N; SiS₂-based glass (LiₓSi_{y}S_{z}, 0<x<3, 0<y<2, and 0<z<4) such as Li₃PO₄-Li₂S-SiS₂; P₂S₅-based glass (LiₓP_{y}S_{z}, 0<x<3, 0<y<3, and 0<z<7) such as LiI-Li₂S-P₂S₅; Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃(PZT) ; Pb₁₋ₓLaₓZr_{1-y}TiyO₃ (PLZT) ; PB(Mg₃Nb_{2/3})O₃-PbTiO₃ (PMN-PT); hafnia (HfO₂); or a mixture of two or more thereof. Specifically, the inorganic particles may include Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃(PZT) ; Pb₁₋ₓLaₓZr_{1-y}TiyO₃(PLZT); PB(Mg₃Nb_{2/3})O₃-PbTiO₃ (PMN-PT); hafnia (HfO₂); or a mixture of two or more thereof, and more specifically, may include at least one selected from the group consisting of Al₂O₃, AlOOH, BaTiO₃, BaSO₄, and MgO.

The average particle diameter (D₅₀) of the inorganic particles may be 0.1 to 1 pm, specifically 0.2 to 0.7 µm.

The inorganic particles are included in the ceramic coating layers 132a and 132b in an amount of 92 wt% or more and less than 100 wt%. The content of the inorganic particles should be considered in relation to the content of the binder, which will be described later, and may be controlled in terms of preventing an increase in resistance due to an excess of the binder while preventing the deterioration of thermal stability due to thermal shrinkage of the porous substrate. Specifically, the inorganic particles may be included in the ceramic coating layers in an amount of 93 wt% to 98 wt%.

The binder may be included in the ceramic coating layers 132a and 132b for binding of inorganic particles and binding of the separator and the electrodes.

In this case, the binder is included in the ceramic coating layers in an amount of more than 0 wt% and less than 8 wt%. When the binder is included in an amount of more than 8 wt%, the binder may be excessively included in the ceramic coating layers, resulting in an increase in resistance of the secondary battery. Meanwhile, since the binder is included in the above-described range, the cell stiffness of the secondary battery may decrease due to the decrease in the adhesive strength between the electrodes and the separator, but as described later, the present disclosure uses a combination of the separator and the gel polymer electrolyte having the above-described characteristics, and thus it is possible to simultaneously achieve improvement of cell stiffness and mechanical durability as well as improvement of resistance of the secondary battery.

Specifically, the binder may be included in the ceramic coating layers in an amount of 2 wt% to 7 wt%, and when the binder is included within the range, it is possible to prevent an increase in resistance of the secondary battery while securing binding force of the inorganic particles as much as possible.

The binder may be a hydrophobic binder including at least one hydrophobic functional group such as a fluorine group (-F), an acrylate group (CH₂=CHCOO-), a methacrylate group (CH2=C(CH₃)COO-), a vinyl acetate group (-CH₂=CHOCO-), or a nitrile group (-C≡N) in the molecule; or a hydrophilic binder including at least one polar group such as a hydroxyl group (-OH), a carboxyl group (-COOH), an maleic anhydride group (-COOOC-), a sulfonic acid group (-SO₃H), or an isocyanate group (-NCO-), and any one or a mixture of two or more thereof may be used. More specifically, the hydrophobic binder may be polyvinylidene fluoride, polyvinylidene fluoride-cohexafluoropropylene, polyvinylidene fluoride-cotrichloroethylene, polymethylmethacrylate, polyacrylonitrile, polyvinyl acetate, polyethylene-covinylacetate, polyimide, polyethylene oxide, or the like. In addition, the hydrophilic binder may be cyanoethylpullulan, cyanoethylpolyvinyl alcohol, cyanoethylcellulose, cyanoethylsucrose, carboxyl methyl cellulose, polyvinyl alcohol, polyacrylic acid, polymaleic anhydride, polyvinylpyrrolidone, or the like.

Specifically, the binder may be an acrylic binder. The acrylic binder may be well dispersed with the inorganic particles when the ceramic coating layers are prepared, thereby preventing the ceramic coating layers from being separated into a binder in an upper layer and inorganic particles in a lower layer. This layer separation consequently hinders the migration of ions in the negative electrode and the positive electrode, resulting in an increase in resistance, and thus when the acrylic binder is used as the binder, the desired resistance reduction effect of the present disclosure may be exhibited to a much superior level.

The acrylic binder may include at least one selected from the group consisting of a copolymer of ethylhexyl acrylate and methyl methacrylate; polymethylmethacrylate; polyethylhexyl acrylate; polybutylacrylate; polyacrylonitrile; and a copolymer of butyl acrylate and methyl methacrylate.

The ceramic coating layers may include the inorganic particles and the binder at a weight ratio of 92:8 or more and less than 100:0, specifically, 93:7 to 98:2.

The thicknesses of the ceramic coating layers 132a and 132b may be 0.1 um to 10 um, specifically 0.5 um to 5 µm, and more specifically 1.0 um to 2.5 um. Since the ceramic coating layers 132a and 132b include the above-described small amount of the binder, it is possible to implement a thin separator, thereby further improving the energy density of the secondary battery and achieving low resistance. The thicknesses of the ceramic coating layers may mean the thickness of one ceramic coating layer formed on one surface of the porous substrate.

The ceramic coating layers 132a and 132b may be prepared by applying a composition for forming a ceramic coating layer, in which inorganic particles and a binder are dispersed in a solvent, to the porous substrate and drying the substrate. The application method of the composition for forming the ceramic coating layer is not particularly limited, and a dip coating, a die coating, a roll coating, a comma coating, a gravure coating, or the like, and specifically, a gravure coating may be used. After applying the composition for forming the ceramic coating layer, natural drying, reversible drying, hot air drying, or the like may be used as a drying method.

The thickness of the separator 130 may be 1 um to 20 um, specifically, 5 um to 14 µm, and according to the present disclosure, because the binder content in the ceramic coating layer is reduced, it is possible to implement a thin separator, thereby further improving the energy density of the secondary battery and achieving low resistance.

In the electrode assembly 100, the adhesive 140 is applied to the surface of at least one of the electrodes 110 and 120 and the separator 130, and thus the electrodes 110 and 120 and the separator 130 adhere to each other.

The adhesive 140 may be introduced for adhesion between the electrodes 110 and 120 and the separator 130. Specifically, the adhesive 140 may be introduced to fix the alignment positions of the electrodes and the separator in the process of laminating, assembling, and stacking the electrodes and the separator during the manufacturing process of the secondary battery. As described above, since the separator 130 according to the present disclosure has a reduced binder content and may not have sufficient adhesive strength between the electrode and the separator when manufacturing the secondary battery, the adhesive 140 may compensate for this problem to easily bond the electrodes and the separator, and prevent the separator from being pushed out during the preparation process of the electrode assembly, thereby improving the efficiency of the process and quality.

The adhesive includes a first oligomer compound.

As used herein, the term "oligomer compound" may mean a compound in which about 10 or less monomers are polymerized, and the "oligomer compound" may include a cross-linkable group.

The first oligomer compound is an adhesive component for bonding the electrodes and the separator, and is included in the adhesive. The first oligomer compound may be used as the adhesive component of the electrode and the separator, and then may be dissolved and polymerized by injection of the gel polymer electrolyte composition to become a component of a gel polymer electrolyte.

The first oligomer compound may include at least one selected from the group consisting of polyether-based oligomers, polycarbonate-based oligomers, acrylate-based oligomers, polysiloxane-based oligomers, phosphazene-based oligomers, polyethylene-based oligomers, urethane-based oligomers, epoxy-based oligomers, fluorine-based oligomers, polyethylene oxide, polyester sulfide, polyvinyl alcohol, and polyvinylidene fluoride, and in particular, at least one selected from fluorine-based oligomers, polycarbonate-based oligomers, and polysiloxane-based oligomers.

For example, the fluorine-based oligomers may specifically include a fluorine-based monomer-derived unit. The fluorine-based oligomers have the advantage that the fluorine-based functional group contained therein inhibits the generation of oxygen radicals caused by the degradation of the cathode active material, thereby further improving battery stability and having excellent flame retardancy. More specifically, the fluorine-based oligomers may include at least one selected from among a tetrafluoroethylene (TFE)-vinyl acetate copolymer, an (allyl 1,1,2,2-tetrafluoroethyl ether)-(2,2,2-trifluoroethyl acrylate) copolymer, a tetrafluoroethylene-(2-vinyl-1,3-dioxolane) copolymer, and a tetrafluoroethylene-vinyl methacrylate copolymer.

In addition, the polycarbonate-based oligomers have the advantage of having affinity to a positive electrode, having a structure similar to an organic electrolyte solution, and having excellent ion conductivity or excellent degree of ionic dissociation. The polycarbonate-based oligomers may be a polycarbonate having a weight-average molecular weight of 1,000-50,000 g/mol, specifically 4,500-30,000 g/mol, and more specifically 10,000-25,000 g/mol.

In addition, the polysiloxane-based oligomers may function as a scavenger of gas (HF, etc.) generated by the side reaction of the electrolyte solution, thereby having an effect of improving high-temperature storage characteristics.

The first oligomer compound may have a weight-average molecular weight of 1,000-50,000 g/mol, specifically, 4,500-30,000 g/mol.

The adhesive 140 may be used to prepare the electrode assembly 100 by bonding the electrodes 110 and 120 and the separator 130, and may be dissolved in an organic solvent included in the gel polymer electrolyte composition 200 after the electrode assembly 100 is accommodated in the battery case 300 and the gel polymer electrolyte composition 200 is injected into the battery case 300. Since the adhesive 140 according to the present disclosure is dissolved after being used to prepare the electrode assembly 100, it is possible to easily bond the electrodes 110 and 120 and the separator 130 without increasing the amount of binders in the separator 130, and it is also possible to further improve the energy density of the secondary battery by preventing an increase in the thickness of the separator due to the increase in the amount of the binder.

As illustrated in FIG. 3, the adhesive 140 may be applied in the form of a plurality of patterns spaced apart from each other. Specifically, the adhesive 140 may be applied to the surface of at least one among the electrodes and the separator in the form of a plurality of patterns spaced apart from each other. Specifically, the adhesive may be applied to the surface of at least one among the electrodes and the separator in the form of a plurality of dots spaced apart from each other.

An area of the adhesive applied may be larger than 0% and 1% or less, for example, 0.0001% to 0.05%, with respect to an area of the surface on which the separator and the electrodes are in contact with each other. According to the above range, it is preferable that the electrodes and the separator may be bonded with sufficient adhesive strength, and at the same time, the problem, in which the adhesive is excessively applied and not dissolved in the solvent and remains to increase resistance, may be prevented.

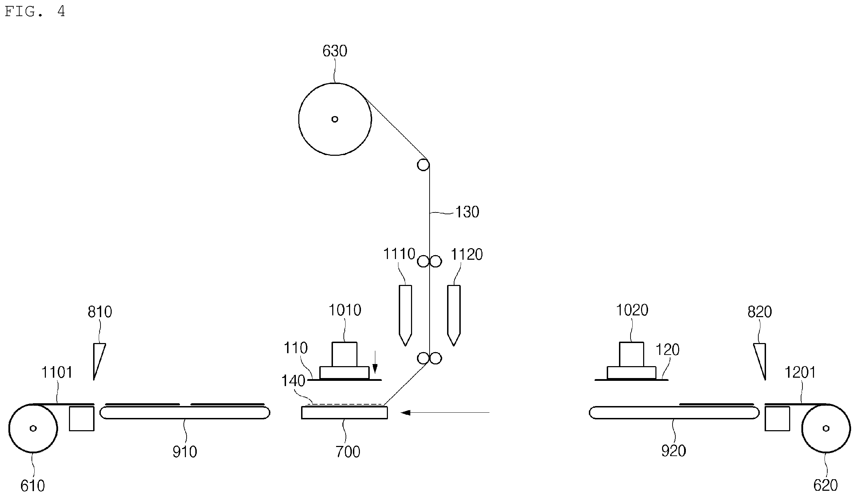

Hereinafter, an exemplary method for preparing the electrode assembly will be described with reference to FIGs. 4 to 7.

Specifically, referring to FIGs. 4 to 7, the electrodes 110 and 120 may include the first electrode 110 and the second electrode 120, and the electrode assembly 100 may be prepared by a method including steps (a) to (d) below:
(a) applying the adhesive 140 to at least a portion of the separator 130 and the first electrode 110;
(b) bonding the separator 130 and the first electrode 110 through the adhesive 140 applied ;
(c) folding one side of the separator 130 to cover the first electrode 110;
(d) applying the adhesive 140 to at least a portion of the separator 130 and the second electrode 120;
(e) bonding the separator 130 and the second electrode 120 through the adhesive 140 applied ; and
(d) folding the other side of the separator 130 to cover the second electrode 120.

Referring to FIG. 4, the adhesive 140 is applied to at least a portion of the separation layer 130 and the first electrode 110. The application of the adhesive 140 may be carried out by applying the adhesive 140 to at least a portion of the separator 130 and the first electrode 110 through a first nozzle 1110. Although FIG. 4 illustrates that the adhesive 140 is applied to the separator 130, the present disclosure is not limited thereto, and the adhesive 140 may be applied to at least a portion of the separator 130, the first electrode 110, or both the separator 130 and the first electrode 110.

As illustrated in FIG. 4, specifically, the separator 130 may be unwound from a separator reel 630 and loaded on the upper surface of a table 700.

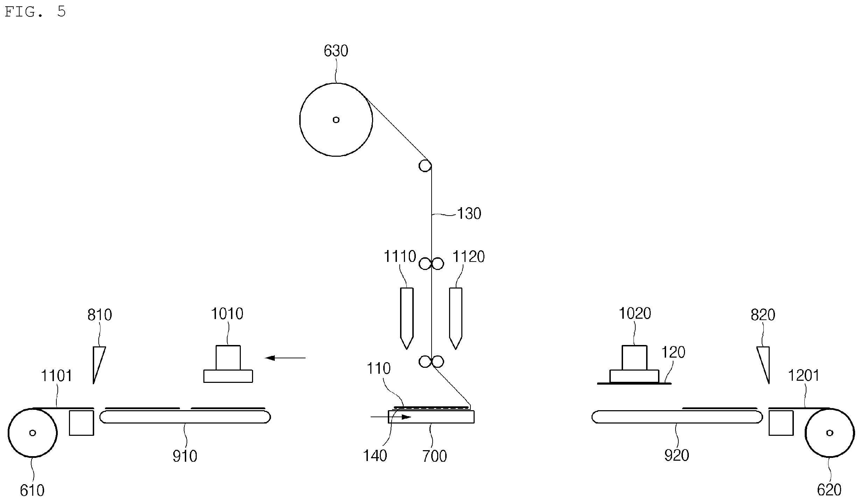

Referring to FIG. 5, the applied adhesive 140 bonds the separator 130 and the first electrode 110.

As illustrated in FIG. 5, the first electrode 110 may be formed by cutting a first electrode sheet 1101 unwound from a first electrode reel 610 by a first cutter 810. In this case, when a first transfer device 910 transfers the first electrode 110, a first header 1010 may suck the first electrode. Thereafter, the first electrode 110 may be loaded or disposed on the separator 130 according to the movement of the first header 1010 and/or the table 700.

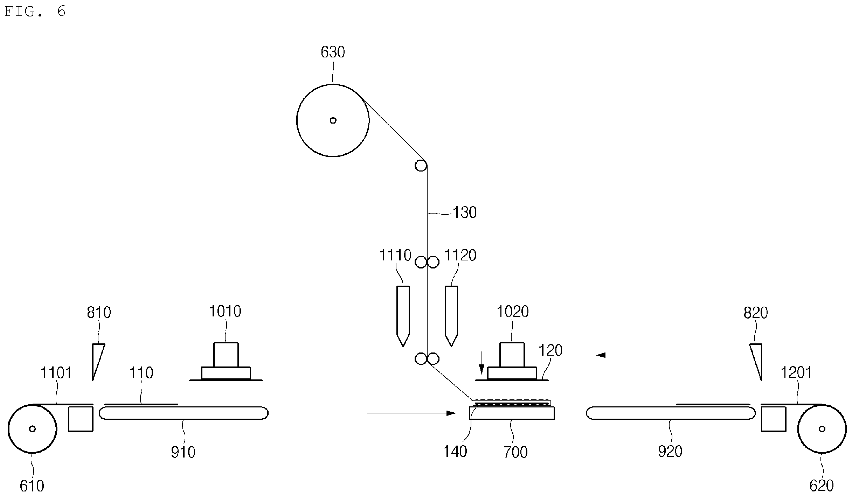

Referring to FIG. 6, one side of the separator 130 may be folded to cover the first electrode 110, and the adhesive 140 may be applied to at least a portion of the separator 130 and the second electrode 120.

After the first electrode 110 is bonded onto the separator 130, one side of the separator 130 is folded to cover the first electrode 110. For example, the folding of the separator 130 may be performed by lateral movement of the table 700.

Meanwhile, the adhesive 140 is applied to at least a portion of the separator 130 and the second electrode 120. The application of the adhesive 140 may be carried out by applying the adhesive 140 to at least a portion of the separator 130 and the second electrode 120 through a second nozzle 1120. Although FIG. 6 illustrates that the adhesive 140 is applied to the separator 130, the present disclosure is not limited thereto, and the adhesive 140 may be applied to at least a portion of the separator 130, the second electrode 120, or both the separator 130 and the second electrode 120.

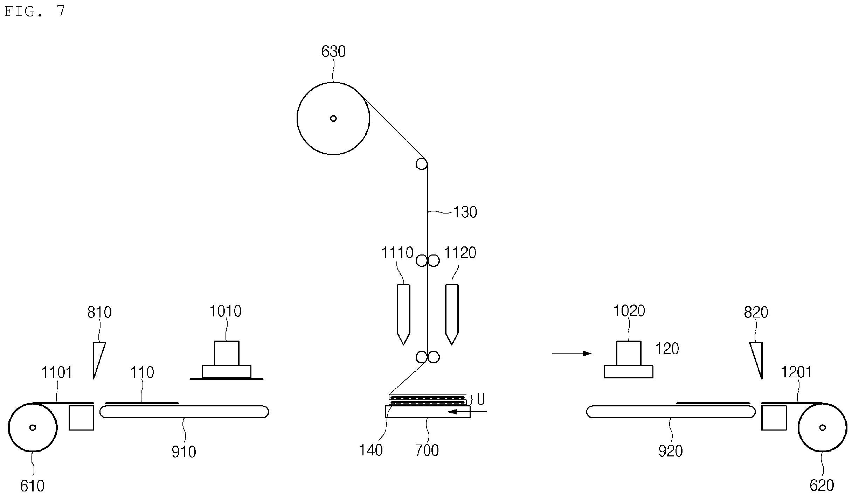

Referring to FIG. 7, the applied adhesive 140 bonds the separator 130 and the second electrode 120, and the other side of the separator 130 is folded to cover the second electrode 120.

The second electrode 120 is bonded to the reverse surface of the separator 130 from the surface on which the separator 130 and the first electrode 110 are in contact with each other.

As illustrated in FIG. 7, the second electrode 120 may be formed by cutting a first electrode sheet 1201 unwound from a second electrode reel 620 by a second cutter 820. In this case, when a second transfer device 920 transfers the second electrode 120, a second header 1020 may suck the second electrode. Thereafter, the second electrode may be loaded or bonded on the separator 130 according to the movement of the second header 1020 and/or the table 700.

Referring to FIG. 7, after the second electrode 120 is bonded, the other side of the separator 130 is folded to cover the second electrode 120. Accordingly, it is possible to prepare the electrode assembly having a structure in which the first electrode and the second electrode are alternately laminated, a separator is interposed between the first electrode and the second electrode, and the separator is folded in a zigzag shape. Thereafter, repeating the above-described process can implement the electrode assembly in which a plurality of first electrodes and second electrodes are alternately laminated.

In this case, in the case of the electrode assembly including the separator bent in a zigzag shape as described above, the separator and/or the electrode may be pushed out due to the bending or folding of the separator in the preparation process, and this may lead to poor quality and reduced process efficiency. However, according to the present disclosure, the electrode and/or the separator may be prevented from being pushed out at a significant level as the adhesive is applied for the bonding of the electrodes and the separator, and the secondary battery having improved quality may be manufactured. The application of the adhesive is particularly preferable in terms of supplementing the adhesive strength of the separator of the present disclosure in which the binder is contained in a low amount.

### (2) Accommodating Electrode Assembly

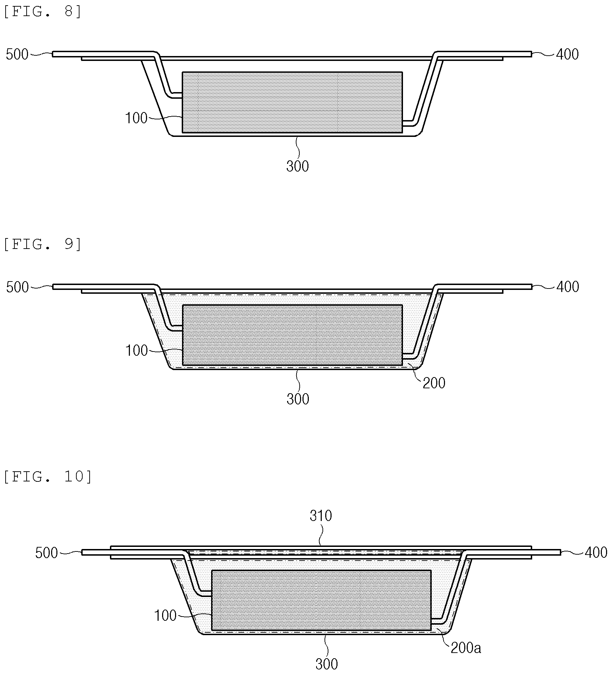

Referring to FIG. 8, the electrode assembly 100 is accommodated in the battery case 300.

For convenience of description, the electrode assembly is briefly illustrated in FIG. 8.

The battery case 300 may be provided in order to accommodate the electrode assembly 100 and the gel polymer electrolyte 200.

The battery case 300 may be a case in the form of a pouch made from a material having flexibility, and may be, for example, an aluminum pouch battery case.

When the battery case 300 is the aluminum pouch battery case, the battery case 300 may be formed of, for example, a pouch film in which a polypropylene layer (PP layer), an aluminum layer, and a polyethylene terephthalate layer (PET layer) are sequentially laminated from the inside.

The battery case 300 may include a cup, which is an accommodation space for accommodating the electrode assembly.

The battery case 300 may include a cover 310, and after accommodating the electrode assembly, curing and gelling the gel polymer electrolyte composition, the battery case 300 may be sealed with the cover to manufacture a sealed secondary battery.

As illustrated in FIG. 8, a plurality of electrode tabs 400 and 500 may be connected to the electrode assembly. Specifically, the plurality of electrode tabs 400 and 500 may be connected to the electrodes 110 and 120 of the electrode assembly 100, and more specifically, may be connected to the first electrode 110 and the second electrode 120, respectively, and may protrude to the outside of the battery case 300 to be a path for allowing electrons to move. In addition, although FIG. 8 illustrates that the two electrode tabs 400 and 500 are disposed in different directions with respect to the electrode assembly 100, the present disclosure is not limited thereto, and the two electrode tabs 400 and 500 may protrude side by side in the same direction from one side of the electrode assembly 100. The plurality of electrode tabs 400 and 500 may be a positive electrode tab and a negative electrode tab, and may be connected to the positive electrode and the negative electrode, respectively.

### (3) Injecting Gel Polymer Electrolyte Composition and Impregnating Electrode Assembly

Referring to FIG. 9, the gel polymer electrolyte composition 200 is injected into the battery case 300 to impregnate the electrode assembly 100. The electrode assembly 100 may be impregnated with the gel polymer electrolyte composition 200 and the gel polymer electrolyte composition 200 may be cured and disposed inside and outside the electrode assembly.

Since the gel polymer electrolyte 200a cured by the gel polymer electrolyte composition 200 has no flowability and the gelled electrolyte is used, cell stiffness of the secondary battery may be improved. In particular, the present disclosure can implement a secondary battery having improved cell stiffness by using the gel polymer electrolyte together with the separator as described above, thereby reducing resistance. On the other hand, when the separator and the liquid electrolyte as described above are used, since the cell stiffness is excessively decreased, processability may be deteriorated and product defects may occur due to cell sagging, separator pushed out, etc., and safety deteriorates, and there is a possibility of explosion of the secondary battery.

The gel polymer electrolyte composition 200 includes a lithium salt, an organic solvent, a polymerization initiator, and a second oligomer compound.

The lithium salt may be used in order to provide lithium ions to the secondary battery.

The lithium salt may be used without particular limitation as long as it is a compound capable of providing lithium ions used in the secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively migrate.

The polymerization initiator may be used in order to polymerize an oligomer compound contained in the gel polymer electrolyte composition to form a bonded polymer network in a three-dimensional structure.

The polymerization initiator may be degraded in the presence of heat or light to form radicals and to polymerize the oligomer compound. Specifically, the polymerization initiator may initiate the polymerization of the second oligomer compound contained in the gel polymer electrolyte composition with the first oligomer compound used for the assembly of the electrode assembly and dissolved by the gel polymer electrolyte composition.

The polymerization initiator may be a photopolymerization initiator or a thermal polymerization initiator according to a polymerization method.

Specifically, as a representative example, the photopolymerization initiator may include at least one compound selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2-phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl(2,4,6-trimethylbenzoyl)-phosphine oxide, bis(2,4,6-trimethylbenzoyl)-phenylphosphine oxide, bis(eta 5-2,4-cyclopentadiene-1-yl), bis[2,6-difluoro-3-(1H-pyrrol-1-yl) phenyl]titanium, 4-isobutylphenyl-4'-methylphenyl iodonium, hexafluorophosphate, and methyl benzoylformate.

Also, as a representative example, the thermal polymerization initiator may include at least one compound selected from the group consisting of benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The polymerization initiator forms a radical by being dissociated by heat at 30 °C to 100 °C in the secondary battery or by being dissociated by light, such as ultraviolet (UV), at room temperature (5 °C to 30 °C), and forms cross-linking by free radical polymerization so that oligomers may be polymerized.

The second oligomer compound may be the same as the type of the first oligomer compound as described above. The first oligomer compound and the second oligomer compound may be the same as or different from each other.

Specifically, the second oligomer compound may include at least one selected from the group consisting of polyether-based oligomers, polycarbonate-based oligomers, acrylate-based oligomers, polysiloxane-based oligomers, phosphazene-based oligomers, polyethylene-based oligomers, urethane-based oligomers, epoxy-based oligomers, fluorine-based oligomers, polyethylene oxide, polyester sulfide, polyvinyl alcohol, and polyvinylidene fluoride, and in particular, at least one selected from fluorine-based oligomers, polycarbonate-based oligomers, and polysiloxane-based oligomers.

For example, the fluorine-based oligomers may specifically include a fluorine-based monomer-derived unit. The fluorine-based oligomers have the advantage that the fluorine-based functional group contained therein inhibits the generation of oxygen radicals caused by the degradation of the cathode active material, thereby further improving battery stability and having excellent flame retardancy. More specifically, the fluorine-based oligomers may include at least one selected from among a tetrafluoroethylene (TFE)-vinyl acetate copolymer, an (allyl 1,1,2,2-tetrafluoroethyl ether)-(2,2,2-trifluoroethyl acrylate) copolymer, a tetrafluoroethylene-(2-vinyl-1,3-dioxolane) copolymer, and a tetrafluoroethylene-vinyl methacrylate copolymer.

In addition, the polycarbonate-based oligomers have the advantage of having affinity to a positive electrode, having a structure similar to an organic electrolyte solution, and having excellent ion conductivity or excellent degree of ionic dissociation.

In addition, the polysiloxane-based oligomers may function as a scavenger of gas (HF, etc.) generated by the side reaction of the electrolyte solution, thereby having an effect of improving high-temperature storage characteristics.

The second oligomer compound may have a weight-average molecular weight of 1,000-50,000 g/mol, specifically, 4,500-30,000 g/mol.

The second oligomer compound may be included in the gel polymer electrolyte composition in an amount of 1 wt% to 20 wt%, specifically 3 wt% to 10 wt%, and within the above range, the cell stiffness improvement effect of the secondary battery may be exhibited excellent, and the ion conductivity and the mobility of lithium ions of the gel polymer electrolyte may be exhibited excellent. The organic solvent may be used in order to dissolve or disperse lithium salts and second oligomer compounds.

The organic solvent is a solvent commonly used in a secondary battery, and for example, ethers, esters (acetates and propionates), amides, linear carbonates or cyclic carbonates, or nitriles (acetonitriles, SN, etc.) may be used alone or in mixture of two or more thereof.

Among them, a carbonate-based solvent containing a carbonate compound such as a cyclic carbonate, a linear carbonate, a mixture thereof, may be typically used.

Specific examples of the cyclic carbonate compound may be a single compound selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halides thereof, or a mixture of two or more thereof. Also, as specific examples of the linear carbonate compound, a compound selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC), or a mixture of two or more thereof may be typically used, but the present disclosure is not limited thereto.

In particular, since propylene carbonate and ethylene carbonate, as cyclic carbonates among the carbonate-based solvents, are highly viscous organic solvents and have high dielectric constants, the propylene carbonate and ethylene carbonate may well dissociate the lithium salt in the electrolyte solution, and, thus, the propylene carbonate and ethylene carbonate may be preferably used. Since an electrolyte solution having high electrical conductivity may be prepared when the above cyclic carbonate is mixed with low viscosity, low dielectric constant linear carbonate, such as ethylmethyl carbonate, diethyl carbonate, or dimethyl carbonate, in an appropriate ratio, the propylene carbonate and ethylene carbonate may be more preferably used.

Furthermore, as the ester among the organic solvents, a single compound selected from the group consisting of methyl acetate, ethyl acetate, propyl acetate, methyl propionate, ethyl propionate, γ-butyrolactone, γ-valerolactone, γ-caprolactone, α-valerolactone, and ε-caprolactone, or a mixture of two or more thereof may be used, but the present disclosure is not limited thereto.

The first oligomer compound may be dissolved in the gel polymer electrolyte composition by injecting the gel polymer electrolyte composition. Specifically, the first oligomer compound used for the assembly of the electrode assembly may be dissolved in the gel polymer electrolyte composition by injecting the gel polymer electrolyte composition. As described later, the first oligomer compound is polymerized upon curing the gel polymer electrolyte composition.

The dissolution of the first oligomer compound may be performed more smoothly in the activation and the pressurization of the degassing process generally accompanied by the manufacturing process of the secondary battery. The activation is a process of forming the solid electrolyte interface (SEI) layer on the electrode plate surface of the electrode assembly through a charging process in the initial secondary battery and allowing the electrode assembly to be charged, and may be a process for enabling the secondary battery to supply power through the activation, for example, may be performed at 45 °C or higher, specifically, 50-70 °C. The degassing process is a process of discharging the gas generated in the activation process, etc. to the outside, and may be accompanied by a process of pressing the secondary battery by a jig or the like. The first oligomer compound may be more smoothly dissolved or removed by such an increase in temperature, pressurization, or the like.

The gel polymer electrolyte composition 200 is injected into the battery case 300, and the electrode assembly 100 is impregnated by the gel polymer electrolyte composition 200. The impregnation may be performed at 10 °C to 30 °C for 0.5 hours to 72 hours, and preferably at 15 °C to 30 °C for 40 hours to 60 hours.

### (4) Curing Gel Polymer Electrolyte Composition

Thereafter, as illustrated in FIG. 10, the gel polymer electrolyte composition 200 is cured. Specifically, the gel polymer electrolyte composition 200 is cured to form a gel polymer electrolyte 200a.

When the gel polymer electrolyte composition is cured, the oligomer compound may be cross-linked and cured to form an electrolyte solidified in a gel form (gel polymer electrolyte) . Specifically, the second oligomer compound included in the gel polymer electrolyte composition and the first oligomer compound dissolved by the gel polymer electrolyte composition are cross-linked or polymerized by the curing process to form a gelled electrolyte.

The gel polymer electrolyte formed by curing the gel polymer electrolyte composition may contribute to improving cell stiffness of the secondary battery. As described above, the separator according to the present disclosure may contribute to resistance reduction by including the ceramic coating layers using a low content of the binder. Accordingly, the secondary battery in which the separator above and the gel polymer electrolyte are combined may simultaneously reduce resistance and improve cell stiffness.

In this case, the curing of the gel polymer electrolyte composition may be performed at 50°C to 100 °C for 0.5 hours to 48 hours, and preferably, may be performed at 60°C to 80 °C for 0.5 hours to 24 hours.

Meanwhile, the curing may be performed while the battery case 300 is sealed. For example, the battery case 300 in which the electrode assembly 100 and the gel polymer electrolyte composition 200 are accommodated may be sealed by a cover or the like, and then the gel polymer electrolyte composition may be thermally cured by heat treatment.

After the curing or the sealing and curing, activation, degassing, resealing processes, and the like known in the art may be further performed.

Hereinafter, examples of the present disclosure will be described in detail so that a person with ordinary skill in the art to which the present disclosure pertains can easily carry out the present disclosure. The disclosure may, however, be embodied in many different forms and should not be construed as being limited to the examples set forth herein.

### EXAMPLES AND COMPARATIVE EXAMPLE

### Example 1

### 1. Preparation of Separator

A composition for forming a ceramic coating layer was prepared by adding Al₂O₃ (average particle diameter (D₅₀): 0.5 µm) as inorganic particles and an acrylic binder to water, which is a solvent, at a weight ratio of 96:4. As the acrylic binder, a mixture of the product name TRD 202A from JSR Corporation and the product name AP-0821 from APEC Corporation was used.

The composition for forming a ceramic coating layer was applied to both surfaces of the polyethylene porous substrate (thickness: 9 um, average pore diameter: 0.05 pm, porosity: 45 vol%) by a gravure coating and dried to form the ceramic coating layer (thickness of one layer: 1.5 pm), thereby preparing a separator (thickness: 12 µm = 1.5 µm + 9 µm + 1.5 pm) .

### 2. Preparation of Electrode Assembly

The separator reel around which the separator had been wound was unwound, and was loaded on the table. An adhesive was applied on the separator by using a first nozzle in a pattern of a plurality of dots spaced apart from each other. As the adhesive, a polycarbonate (weight average molecular weight Mw: 20,000) was used as the first oligomer compound. Thereafter, a positive electrode sheet was unwound from a first electrode reel, around which the positive electrode sheet had been wound, cut with a first cutter to prepare a positive electrode, and the positive electrode is transferred to a first transfer device to be sucked to a first header. The first header was moved toward the table to bond the positive electrode on the separator.

Thereafter, the table was laterally moved to fold the separator to one side to cover the positive electrode.

Thereafter, the same adhesive used above was applied, using a second nozzle, onto the surface of the separator (the reverse surface from the surface on which the separator and the positive electrode are in contact with each other) in a plurality of dot-shaped patterns spaced apart from each other.

Thereafter, a negative electrode sheet was unwound from a second electrode reel, around which the negative electrode sheet had been wound, cut with a second cutter to prepare a negative electrode, and the negative electrode is transferred to a second transfer device to be sucked to a second header. The second header is moved toward the table to bond the negative electrode to the surface of the separator (the reverse surface from the surface on which the separator and the negative electrode are in contact with each other).

Thereafter, the table was laterally moved again to fold the separator to the other side to cover the negative electrode.

The above process was repeated several times to prepare an electrode assembly in which 18 basic units in which a separator/positive electrode/separator/negative electrode were sequentially laminated were laminated. In this case, the separator was folded in a zigzag shape.

In the case of the positive electrode, a positive electrode slurry was prepared by adding Li[Ni_{0.8}Co_{0.1}Mn_{0.1}]O₂ as a positive electrode active material, PVdF as a binder, and carbon black as a conductive agent in a weight ratio of 97.5:1.5:1.0 to N-methylpyrrolidone (NMP) as a solvent, and then the positive electrode slurry was applied to both surfaces of an aluminum current collector as a positive electrode collector, and dried and rolled to form a positive electrode active material layer.

Also, in the case of the negative electrode, a negative electrode slurry was prepared by adding graphite as a negative electrode active material, styrene-butadiene rubber as a binder, carbon black as a conductive agent, and carboxymethylcellulose (CMC) as a thickener to water as a solvent in a weight ratio of 95.5:2.5:1.0:1.0, and the negative electrode slurry was applied to both surfaces of a copper current collector as a negative electrode collector, and dried and rolled to form a negative electrode active material layer.

### 3. Preparation of Gel Polymer Electrolyte Composition

A gel polymer electrolyte composition was prepared by mixing a polycarbonate-based oligomer (weight average molecular weight Mw: 20,000) as an oligomer, LiPF₆ as a lithium salt, and azobisisobutyronitrile (AIBN) as a polymerization initiator in a solvent.

The solvent is a mixture of ethyl carbonate (EC) and ethyl methyl carbonate (EMC) in a volume ratio of 3:7, the lithium salt is included in the gel polymer electrolyte composition at a concentration of 1.0 M, the oligomer is included in the gel polymer electrolyte composition in an amount of 5 wt%, and the polymerization initiator is included in the gel polymer electrolyte composition in an amount of 0.6 parts by weight based on 100 parts by weight of the oligomer.

### 4. Manufacture of Secondary Battery

A pouch-type battery case made from an aluminum material was prepared as a battery case, and an electrode assembly was accommodated in an accommodation space of the battery case.

Thereafter, the gel polymer electrolyte composition was injected into the battery case in which the electrode assembly was accommodated. After the injection of the gel polymer electrolyte composition, vacuum sealing was performed.

As the gel polymer electrolyte composition was injected, the adhesive present in the electrode assembly was dissolved by a solvent of the gel polymer electrolyte composition.

Thereafter, the gel polymer electrolyte composition injected into the battery case was cured. The curing was performed by heat treatment at 60 °C for 5 hours.

Thereafter, the battery case was cooled, sealed, and degassed to manufacture a secondary battery. The thickness of the secondary battery was 0.8 cm.

### Comparative Example 1

### 1. Preparation of Separator

The same separator as prepared in Example 1 was used.

### 2. Preparation of Electrode Assembly

An electrode assembly was prepared in the same manner as in Example 1, except that polyvinylidene fluoride (PVdF) was used as an adhesive.

### 3. Preparation of Gel Polymer Electrolyte Composition

The same gel polymer electrolyte composition as in Example 1 was prepared.

### 4. Manufacture of Secondary Battery

A secondary battery was manufactured in the same manner as in Example 1, except that the above-prepared electrode assembly was used. The thickness of the secondary battery was 0.8 cm.

### Comparative Example 2

### 1. Preparation of Separator

A composition for forming a ceramic coating layer was prepared by adding Al₂O₃ (average particle diameter (D₅₀): 0.5 µm) as inorganic particles and PVdF as a binder to acetone, which is a solvent, at a weight ratio of 70:30.

The composition for forming a ceramic coating layer was applied to both surfaces of the polyethylene porous substrate (thickness: 9 µm, average pore diameter: 0.05 pm, porosity: vol%) by a gravure coating and dried to form the ceramic coating layer (thickness of one layer: 3 pm), thereby preparing a separator (thickness: 15 µm = 3 µm + 9 µm + +3 pm) .

### 2. Preparation of Electrode Assembly

A plurality of the above-prepared separators were prepared. In addition, a plurality of those identical to the positive electrode and the negative electrode prepared in Example 1 were prepared.

The first oligomer compound used in Example 1 as an adhesive was applied to one separator in a pattern of a plurality of dots spaced apart from each other. A positive electrode was bonded onto the separator. The first oligomer compound was applied to the positive electrode in a pattern of a plurality of dots spaced apart from each other, and another separator was bonded onto the positive electrode. Thereafter, the first oligomer compound was applied to the separator in a pattern of a plurality of dots separated from each other, and a negative electrode was bonded onto the separator.

The above process was repeated to prepare an electrode assembly in which 18 basic units in which a separator/positive electrode/separator/negative electrode were sequentially laminated were laminated. In this case, the two separators in the basic unit are separate separators, and are not folded in a zigzag shape as in Example 1.

### 3. Preparation of Gel Polymer Electrolyte Composition

The same gel polymer electrolyte composition as in Example 1 was prepared.

### 4. Manufacture of Secondary Battery

A secondary battery was manufactured in the same manner as in Example 1, except that the above-prepared electrode assembly was used. The thickness of the secondary battery was 0.8 cm.

### EXPERIMENTAL EXAMPLES

### 1. Resistance Evaluation

### (1) Initial Resistance Measurement

In the secondary batteries of Example 1, Comparative Example 1, and Comparative Example 2, the initial resistance value calculated using the voltage change amount (ΔV) measured when discharging at 0.33 C rate for 30 seconds at 100% of SOC is shown in Table 1 below.

### (2) Measurement of Resistance after 100 Cycles of Charging and Discharging

In the secondary batteries of Example 1, Comparative Example 1, and Comparative Example 2, 100 cycles of charging and discharging were performed under the following charging and discharging conditions. Thereafter, the 100 cycle resistance value calculated using the voltage change amount (ΔV) measured when discharging at 0.33 C rate for 30 seconds at 100% of SOC is shown in Table 1.

### (3) Calculation of Resistance Increase Rate

The resistance increase rate after 100 cycles of charging and discharging was evaluated through the following equation, and the results are shown in Table 1. Resistance increase rate (%) = (100 cycle resistance - initial resistance)/initial resistance × 100

### 2. Evaluation of Life Performance

The secondary batteries of Example 1, Comparative Example 1, and Comparative Example 2 prepared above were charged and discharged for 100 cycles at 45 °C under the following conditions to evaluate capacity retention at the 100th cycle.

### Charging and discharging conditions

Charging: CC/CV mode; 0.33C; 4.2V, 1/20C cut-off
Discharging: CC mode; 0.33C; 2.5V cut-off

As the above experimental conditions, the value obtained by dividing the discharge capacity for the 100th cycle by the discharge capacity for the first cycle was defined as the capacity retention. The results are shown in Table 1 below.

### 3. Evaluation of Cell Stiffness

According to the 3-point bending method, the stress value was measured when 2 mm displacement was applied by applying a force at a speed of 10 mm/minute downwards from the center of each secondary battery. In this case, pre-load was applied with 30gf, the experiment was performed at room temperature, and the stress value was measured by a universal testing machine (UTM). The results are shown in Table 1 below.

### 4. Ignition Temperature Measurement Test

The secondary batteries of Example 1, Comparative Example 1, and Comparative Example 2 were fully charged at 100% of SOC, placed in a hot box, and heated at a rate of 0.5 °C/minute to measure a temperature at which ignition starts, and the measured temperature is shown in Table 1.

**[Table 1]**

| | Experimental Example 1 | | | Experime ntal Example 2 | Experim ental Example 3 | Experim ental Example 4 |
|---|---|---|---|---|---|---|
| | Initial resista nce (mΩ) | 100 cycle resistan ce (mΩ) | Resista nce increas e rate (%) | 100 cycle capacity retentio n (%) | Cell Stiffne ss | Ignitio n tempera ture (°C) |
| Example 1 | 2.99 | 3.15 | 5.3 | 98.9 | 4.46 | 177 |
| Comparative Example 1 | 3.05 | 4.13 | 35.4 | 98.9 | 4.39 | 178 |
| Comparative Example 2 | 3.19 | 3.31 | 3.8 | 95.8 | 6.81 | 168 |

Referring to Table 1, it may be seen that the secondary battery manufactured according to Example 1 has low resistance and resistance increase rate, high life characteristics, and excellent thermal stability.

Meanwhile, the secondary battery of Comparative Example 1 shows higher resistance and resistance increase rate than that of Example 1. This is thought to be due to no use of the oligomer compound as the adhesive used to prepare the electrode assembly.

In addition, the secondary battery of Comparative Example 2 uses both the gel polymer electrolyte and the separator containing a large amount of binders. Accordingly, the secondary battery manufactured in Comparative Example 2 has a very high resistance and significantly deteriorated life characteristics compared to that of Example 1. Meanwhile, in the case of Comparative Example 2, the thermal stability significantly deteriorates, and this seems to be because the inorganic particle content of the separator is relatively small, and thus the heat shrinkage and short circuit of the separator are not sufficiently prevented.

### [Description of the Symbols]

10: Secondary Battery
100: Electrode assembly
U: Basic unit
110: First electrode
110a: One end portion of first electrode
120: Second electrode
120a: One end portion of second electrode
130: Separator
131: Porous substrate
132a, 132b: Ceramic coating layer
140: Applied adhesive
200: Gel Polymer Electrolyte
300: Battery case
310: Cover
400, 500: Electrode tap
610: First electrode reel
620: Second electrode reel
630: Separator reel
700: Table
810: First cutter
820: Second cutter
910: First transfer device
920: Second transfer device
1010: First header
1020: Second header
1101: First electrode sheet
1201: Second electrode sheet
1110: First nozzle
1120: Second nozzle

## Claims

1. A method for manufacturing a secondary battery, the method comprising:
preparing an electrode assembly in which electrodes and a separator are alternately laminated, and an adhesive is applied to a surface of at least one among the electrodes and the separator so as to adhere the electrodes and the separator to each other;
accommodating the electrode assembly in a battery case;
injecting a gel polymer electrolyte composition into the battery case to impregnate the electrode assembly with the gel polymer electrolyte composition; and
curing the gel polymer electrolyte composition,
wherein the adhesive comprises a first oligomer compound,
wherein the separator comprises a porous substrate and ceramic coating layers disposed on both surfaces of the porous substrate,
wherein the ceramic coating layers comprise 92 wt% or more and less than 100 wt% of inorganic particles and more than 0 wt% and 8wt% or less of a binder, and
wherein the gel polymer electrolyte composition comprises a lithium salt, an organic solvent, a polymerization initiator, and a second oligomer compound.

2. The method of claim 1, wherein the first oligomer compound is dissolved in the gel polymer electrolyte composition by injecting the gel polymer electrolyte composition, and
wherein the first oligomer composition is cured together when the gel polymer electrolyte composition is cured.

3. The method of claim 1, wherein the adhesive is applied in the form of a plurality of patterns spaced apart from each other.

4. The secondary battery of claim 1, wherein an area of the adhesive applied is larger than 0% and 1% or less with respect to an area of the surface at which the separator and the electrodes are in contact with each other.

5. The method of claim 1, wherein the ceramic coating layers comprise 93 wt% to 98 wt% of inorganic particles and 2 wt% to 7 wt% of a binder.

6. The method of claim 1, wherein the binder comprises an acrylic binder.

7. The method of claim 6, wherein the acrylic binder comprises at least one selected from the group consisting of a copolymer of ethylhexyl acrylate and methyl methacrylate, polymethylmethacrylate, polyethylhexyl acrylate, polybutylacrylate; polyacrylonitrile, and a copolymer of butyl acrylate and methyl methacrylate.

8. The method of claim 1, wherein the ceramic coating layers have a thickness of 0.1 um to 10 um.

9. The method of claim 1, wherein the separator has a thickness of 1 um to 20 µm.

10. The secondary battery of claim 1, wherein the first oligomer compound and the second oligomer composition each independently comprises at least one selected from the group consisting of a fluorine-based oligomer, a polycarbonate-based oligomer, and a polysiloxane-based oligomer.

11. The method of claim 1, wherein the electrodes comprise a first electrode and a second electrode, and
the electrode assembly is prepared by a method comprising steps (a) to (d) below:
(a) applying the adhesive to at least a portion of the separator and the first electrode;
(b) bonding the separator and the first electrode through the adhesive applied;
(c) folding one side of the separator to cover the first electrode;
(d) applying the adhesive to at least a portion of the separator and the second electrode;
(e) bonding the separator and the second electrode through the adhesive applied; and
(d) folding the other side of the separator to cover the second electrode.
